# EUROPEAN PATENT APPLICATION

(11) **EP 1 292 144 A1**
(43) Date of publication of application: **12.03.2003**
(21) Application number: 01119539.3
(22) Date of filing: 14.08.2001
(51) Int. Cl.: H04N 7/167, H04N 7/173, H04N 5/00

(54) **System, method and software for delivering content from a server to a customer**

(71) Applicant: IP-Control GmbH, 35440 Linden (DE)
(72) Inventor: Rüffler, Dieter, c/o IP-Control, 35440 Linden (DE)
(74) Representative: Körber, Martin, Dipl.-Phys.

(57) **Abstract**

The present invention relates to a content service apparatus (14) for forwarding content from a content server (21) to a customer (2), comprising encrypting means (18) for encrypting a received media stream received from said content server (21) on the basis of encryption keys, stream transmitting means (9; 11) for transmitting the encrypted media stream to said customer, key transmitting means (19) for transmitting decryption keys for decrypting said encrypted media stream to said customer. The present invention further relates to a conditional access apparatus (7) for controlling the delivery of content from a content server (21) to a customer (2), whereby the conditional access apparatus receives the decryption keys from a content service apparatus according to the present invention and transmits the received decryption keys to the customer depending on an access rule for the customer. The present invention further relates to a customer apparatus to a method and to corresponding computer software.

## Description

The present invention relates to a content service apparatus, a conditional access apparatus, a customer apparatus and to a method and a computer software for forwarding content from a content server to a customer. Particularly, the present invention is directed to the provision and the control of the transmission of content over Internet multicast or broadcast services.

Hereby, the present invention is generally directed to the field of electronic commerce and more particularly to the field of facilitating registration free authorization for access to streaming, multi- or broadcast premium content via Internet.

The potential of funding Internet services only out of income from advertising is to a large extend exhausted. The direct financing of services is difficult due to the lack of convenient payment services. Customers or consumers reject subscriptions to innovative and new services if they do not realize the immediate and long term benefits. For a content or a service provider it is very cost intensive to unite a critical mass of Internet service providers with well-established customer relationships. Thus, content billing is not an option for innovative Internet services. Today there exists no universal method to offer and charge for premium streaming media for multicasts over the Internet or for arbitrary services on the Internet in a content service independent way. With the present distribution of premium streaming media, the industry faces the following problems:
1. How to enforce protection of premium streaming media for multicasts or broadcasts over the Internet or via satellite against unwarranted access? (With internet protocol version 6 on the verge of deployment by large carriers the still unsolved problem of content protection for pay TV repeats in the Internet. Current pay TV systems can be easily hacked and misused by a computer comprising a TV card and a computer program for the decryption or decoding of the encrypted pay TV signals.)
2. How to enable dedicated access policies, as e.g. anonymity and privacy, managed corporate access, vouchers and the like?
3. How to gain platform independence regarding to type of content, the content server and the platform of the consumers or customers, such as mobile (wireless) terminals, TV, PDA, PC and the like? (Due to converting media services one premium content should be able to use many channels).
4. How to manage session of premium content usage beyond subscription, as e.g. time, volume, event? (At the moment, only limited measures of the consumed content is possible).

The object of the present invention is therefore to provide a secure and at the same time flexible possibility of providing content from a content server to a consumer or customer particularly, the present invention should enable a registration free access to content distributed over the Internet.

The above object is achieved by a content service apparatus for forwarding content from a content server to a customer according to claim 1, the content service apparatus comprises encrypting means for encrypting a received media stream received from said content server on the basis of encryption keys, stream transmitting means for transmitting the encrypted media stream to said customer, and key transmitting means for transmitting decryption keys for decrypting said encrypted media stream to said customer.

The present invention thus enables a flexible and at the same time secure delivery of premium content from a content server to a customer or consumer computer. The transmission of two separate streams of the encrypted media content and the decryption keys protect against unwarranted access to the content in a simple but very efficient way. The advantage is particularly that the stream with the media content is unreadable and can only be decrypted and read on the basis of the separately transmitted decryption keys. In this context it has to be noted that encrypted in the sense of the present description means any kind of coding, scrambling or any other way of making the transmitted data or information unreadable for a normal user without having the proper decryption, decoding, descrambling or the like information on the basis of which the received media content can be made readable.

Advantageously, the stream transmitting means transmits the encrypted media stream to the customer on the basis of a broadcast service or a multicast service. The advantage is that a broadcast or a multicast transmission has very small or even minimum bandwidth requirements. Further advantageously, the key transmitting means transmits the decryption keys to the customer on the basis of a unicast service. The advantage here is that no bandwidth bottle neck exists on the customer's side and that the stream of decryption keys is scaleable at the side of the content service apparatus. Hereby, the key transmitting means advantageously transmits the decryption keys to the customer via a conditional access module for controlling the access to the content. The advantage here is that the dynamic change of the encryption keys tremendously increases the security against attacks and hacking. Further advantageously, key generating means are provided for generating varying encryption keys for encrypting said received media stream. Further advantageously, a method providing means for providing key generating methods is comprised whereby the key generating means generates the encryption keys on the basis of key generating methods received from the method providing means. In this case, the method providing means advantageously transmits information about the key generating methods to the customer in order to enable the decryption of the encrypted media stream. Hereby, the key generating methods are also changed and varied dynamically to increase the protection against fraud. Hereby, it is particularly advantageous if the encryption keys are varied more often and quicker than the key generating methods. Advantageously, the method providing means transmits the information about said key generating methods to said customer on the basis of a unicast service. The particular advantage here is the combination of the transmission of the encrypted media stream being transmitted in a multicast or broadcast manner and the decryption keys being transmitted in a unicast manner enabling a simple and feasible delivery of premium streaming media in a tamper proof manner.

The above object is further achieved by a conditional access apparatus for controlling the delivery of content from a content server to a customer according to claim 9, whereby the conditional access apparatus receives the decryption keys from a content service apparatus as defined above and transmits the received decryption keys to the customer depending on an access rule for said customer. Hereby, the transmission of the decryption keys to the customer advantageously stops if said access rule expires. The conditional access apparatus or system may e.g. be a set-top-box, a digital rights management system, a payment system or in general a transaction or clearing network. The conditional access apparatus controls the transmission of the decryption keys from the content service apparatus to a customer apparatus, which is particularly simple and advantageous if the transmission of the decryption keys is based on a unicast service. Hereby, a conditional access becomes applicable and feasible for anonymous consumers or customers of broadcast and/or multicast services. Particularly, if the decryption keys transmitted via the conditional access apparatus are dynamic and have small or very small life cycles, small and very small billing entities are possible.

The above object is further achieved by a customer apparatus according to claim 11 for receiving content from a content service apparatus as defined above, comprising decryption means for decrypting and encrypted media stream received from said content service apparatus on the basis of decryption keys received from the content service apparatus to obtain a decrypted media stream. Hereby, the customer apparatus advantageously further receives information about key generating methods from the content service apparatus, whereby the decryption means decrypts the encrypted media stream on the basis of the received decryption keys and the received information about key generating methods.

It has to be noted that the content service apparatus, the conditional access apparatus and/or the customer apparatus can advantageously be realized as a respective server, computer, or the like. Further, the means or performing the respective functions in the respective apparatus can either be realized in hardware or software. Advantageously, the entire system is a computer system in which the different functions defined above are realized by computer software.

The above object is further achieved by a method for forwarding content from a content server to a customer according to claim 13, comprising the steps of encrypting a media stream received from the content server on the basis of encryption keys, transmitting the encrypted media stream to the customer, and transmitting decryption keys for decrypting said encrypted media stream to said customer. Advantageously, the encrypted media stream is transmitted to the customer on the basis of a broadcast service or a multicast service. Further advantageously, the decryption keys are transmitted to the customer on the basis of a unicast service. Hereby, the decryption keys are advantageously transmitted to the customer via a conditional access module for controlling the access to said content. Further advantageously, the method comprises the further step of generating varying encryption keys for encrypting the received media stream. The method according to the present invention advantageously further comprises the step of providing key generating methods, whereby the encryption keys are generated on the basis of the key generating methods. Hereby, information about said key generating methods is advantageously transmitted to the customer in order to enable decryption of the encrypted media stream. Further advantageously, the information about the key generating methods is transmitted to the customer on the basis of a unicast service. The inventive method advantageously further comprises the step of controlling the delivery of said content from said content server to said customer by receiving said decryption keys and transmitting said received decryption keys to said customer depending on an access rule for said customer. Hereby, the transmission of the decryption keys to said customer is advantageously stopped if the access rule expires. Advantageously, the method further comprises the step of decrypting the encrypted media stream on the basis of the received decryption keys to obtain a decrypted media stream. In this case, the encrypted media stream is advantageously decrypted on the basis of the received decryption keys and the received information about key generating methods.

The above object is further achieved by a computer software product for forwarding content from a content server to a customer being adapted to perform the method steps as defined above when installed in a memory of one or more apparatuses of the system.

The particular advantage of the present invention is the protection against unwanted access to premium content during the transmission of content in a media stream from a content server to a consumer or customer server or computer. Particularly, the present invention combines the advantages of both broadcast or multicast services on one side and unicast services on the other side by deploying two confluent streams, one stream carrying the encrypted media being able to reach a wide range of anonymous consumers or customers efficiently by broadcast of multicast, and the second stream carrying information about decryption keys and methods which reaches authorised customers or consumers only by unicast. On the customer's side, this concept yields into one authorized premium content stream. The Internet in its version 6 incorporates both broadcast alike services (= multicast) and unicast services. In the course of the convergence of classic media with new Internet media the present invention will also become applicable to classic broadcast enabled consumer equipment like radio and television, and will be particularly advantageous for pay TV applications. The present invention further delivers an interface to trigger control of premium broad- or multicast services by a third party conditional access module. This interface is the unicast stream of encryption keys which are intercepted and controlled by third party conditional access modules that deliver the decryption keys to the consumers or customers depending on access rules for the respective customer. The access rules are obtained on the basis of a communication between the consumer or customer with a respective payment service. After a payment is ensured, the payment service delivers corresponding positive information to the conditional access system that the access for this specific customer is granted. Upon the expiration of the respective access rule, the conditional access module terminates the transmission of the decryption keys so that the customer is no longer able to decrypt the media stream. Here, one key of the key stream facilitates the decryption of the encrypted media stream for a sequence with a duration below the minimum chargeable unit. Soon after a key stream interruption the consumption of the premium content becomes unfeasible for the customer.

The present invention is explained in more detail further below in relation to preferred embodiments relating to the enclosed drawings, in which
Fig. 1 schematically shows conceptual view of a general system comprising a consumer, a content provider and a financial service provider in which the present invention can be applied,
Fig. 2 schematically shows an information and processing view on the system of Fig. 1,
Fig. 3 schematically shows a sequence diagram of a session initiation,
Fig. 4 schematically shows a sequence diagram of a session termination, and
Fig. 5 schematically shows deployment view of different examples of the system according to the present invention.

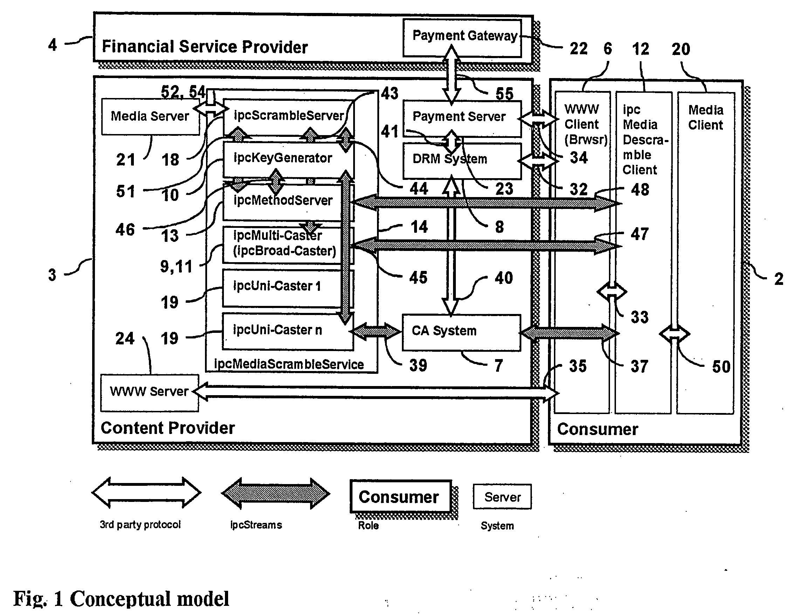

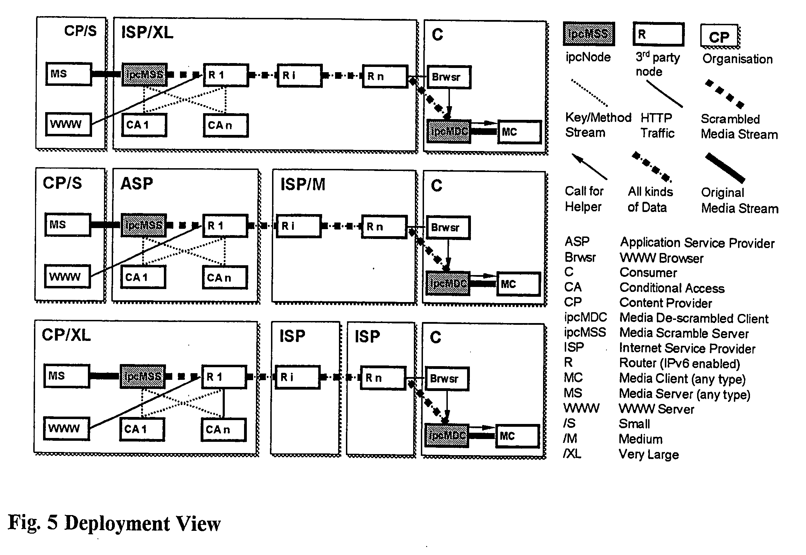

The invention is a distributed system as shown in Fig. 1 to be deployed in different organizational domains: Consumer domain and content provider domain. The domains are owned by different roles: consumer or customer 2 and content provider 3. The deployment view, refer to Fig. 5, shows which roles are involved and which components have to be deployed by a respective role. In real world some of these roles might be split and be represented by several legal entities, e.g. the content provider domain might be split in the roles of a content owner and an application service provider. A description of roles is summarized in table 1. The financial service provider 4 is part of the value chain but is not running entity of this invention.

**Table 1**

| **Role description** | | | |
|---|---|---|---|
| **#** | **Abb.** | **Role** | **Description** |
| 1 | ASP | Application Service Provider | An Application Service Provider 1 has the option to run a dedicated Internet premium content (ipc) module to offer scrambling services to hosted content providers (Content Provider) 3. A small Content Provider 3 may choose to use hosting/scrambling services of an ASP 1. |
| 2 | C | Consumer or Customer | Regular multimedia-enabled Computer (owned by a person) with Web Browser 6 connected to the Internet plus ipcMediaDescrambleClient (ipc Media Descramble Client 12). |
| 3 | CP | Content Provider | The Content Provider 3 runs classic streaming content servers. In order to monetize his content the Content Provider 3 installs additional Internet premium content (ipc) modules: |
| | | | (a) Conditional access 7 or Digital Rights Management 8 (Digital Rights Management) or Shop system |
| | | | (b) ipcMulticast (ipc Multi-Caster 11). |
| 4 | FSP | Financial Service Provider | The owner of a payment instrument. The Content Provider 3 has to connect his conditional access 7 module to a Financial Service Provider service 22 in order to generate revenues with multicast airtime. |
| 5 | ISP | Internet Service Provider | A small Content Provider 3 may choose to use hosting/scrambling services 14 of an ISP 5. |

Components that are marked with a trailing "ipc" enable Internet premium content. With the help of "ipc" Product Suite - summarized as ipc Production Suite - the existing classic or proprietary client and server entities for streaming media are integrated into a scrambling platform with no need to alter existing streaming platforms. The invention does not effect the application of further additional services to enforce copyright protection e.g. fingerprinting or watermarking. Fig. 1 shows a conceptual model of ipc Product Suite. The server side modules are summarized as ipc Media Scramble Service 14 also called content service apparatus 14. The client side is called consumer or customer apparatus 2.

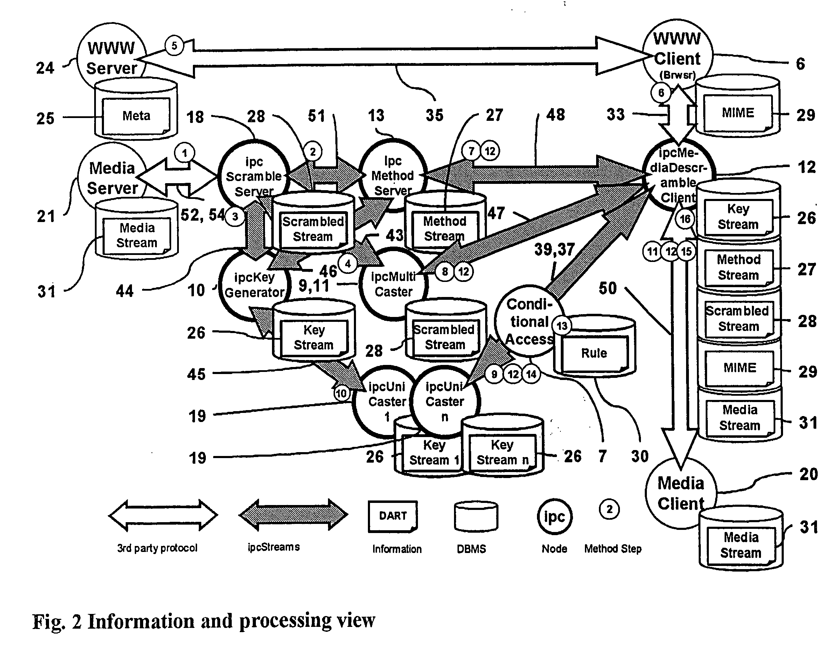

The components of the system perform message exchange as shown in the information and processing view in Fig. 2. A detailed description of the tasks of components is summarized in table 2.

**Table 2**

| **Component descriptions** | | | |
|---|---|---|---|
| **#** | **Abb.** | **Component** | **Function** |
| 6 | Brwsr | Web Browser | A System which shows web content |
| 7 | CA | Conditional Access apparatus or Conditional Access Module | Conditional access apparatus 7 is a system that: |
| | | | (a) Supports retail of communication services, e. g. Set Top Boxes (STB) |
| | | | (b) Supports retail of tangible goods, e. g. online shop systems |
| | | | (c) Support copyright management, e. g. Digital Rights Management 8 solutions. |
| 8 | DRM | Digital Rights Management | Digital rights management systems support for copyright management. Digital Rights Management systems issue rules for Conditional Access7 modules. |
| 9 | ipcBC | ipcBroad-Caster or Stream Transmitting Means | Receives scrambled media stream 28 from ipc Scramble Server 18. Facilitates a broadcast to a broadcast capable network of the scrambled media stream. |
| 10 | ipcKG | ipcKeyGenerator or Key Generating Means | Receives key generation method 27 from ipc Method Server 13. Computes random keys for key stream 26 with method 27 from ipc Method Server 13. Sends random key to ipc Uni-Caster 19 and ipc Scramble Server 18 by utilization of communication links 44, 45. |
| 11 | ipcMC | ipcMulti-Caster or Stream Transmitting Means | Receives scrambled media stream from ipc Scramble Server 18. Facilitates a multicast to the Internet of the scrambled media stream. |
| 12 | ipcMDC | ipcMedia DescrambleClient or Decryption Means | Receives meta information 25 about scrambled media stream 28, 47 from calling WWW browser 6. Sends get-method-request to ipc Method Server 13. Registers with multicast service on network 47. Receives de-scrambling method stream 27, 48 from ipc Method Server 13. Receives scrambled media stream 47 from ipc Multi-Caster 11. Receives key stream 26, 37, 39 from ipc Uni-Caster 19. Computes original media stream 31 by descrambling scrambled media stream 28. Calls media helper 20 with meta information 25 about a locally available streaming media service 12. |
| 13 | ipcMS | ipcMethod-Server or Method Providing Means | Archives methods 27 for scrambling, de-scrambling and key generation. Receives method-get-requests from ipc Key Generator 10, ipc Scramble Server 18 and ipc Media Descramble Client 12. Sends methods to ipc Key Generator 10, ipc Scramble Server 18 and ipc Media Descramble Client 12 by utilization of communication links 48, 51, 55. |
| 14 | ipcMSS | ipcMediaScrambleService | Collective term for ipc Node 15 of ipc Production Suite 16 at Content Provider domain. |
| 15 | ipcN | ipc Nodeode | Collective term for a single component of ipc Production Suite 16. |
| 16 | ipcPS | ipcProduction Suite | Collective term for all components of ipc Production Suite 16. |
| 17 | ipcS | ipcStream | Collective term for streams of ipc Production Suite 16. |
| 18 | ipcSS | ipcScramble Server or Encrypting Means | Sends get-method-request to ipc Method Server 13. Receives scrambling method stream from ipc Method Server 13. Receives key stream from ipc Uni-Caster 19. Receives native media stream from Media Server 21. Computes scrambled media stream. Sends scrambled media stream to ipc Multi-Caster 11 respectively ipc Broad-Caster 9. |
| 19 | ipcUC | ipcUni-Caster | Receives key stream from ipc Scramble Server 18. Sends key stream as uni-cast to certified ipc Media Descramble Client 12 nodes. |
| 20 | MC | Media Client | Consumer premises soft- and hardware. Classic clients are WWW client 6, Video-client, Audio-client, and Mail-client. Goal: service consumption. Receives de-scrambled media stream via local loop from ipc Media Descramble Client 12. |
| 21 | MS | Media Server or Content Server | Content provider premises soft- and hardware. Classic servers are WWW server 24, Video- server, Audio- server, and Mail-server. Goal: content provisioning. Sends native media streams to ipc Scramble Server 18. |
| 22 | PG | Payment Gateway | Native payment gateway 22 of Financial Service Provider 4, operated by Financial Service Provider 4. Receives transaction requests from registered Payment Server 23. Payment Gateway 22 hides the settlement network of Financial Service Provider 4 from Payment Server 23. |
| 23 | PS | Payment Server | Native payment server 23 of Financial Service Provider 4 optionally operated by Content Provider 3 or Financial Service Provider 4. Generates transactions for payment service of Financial Service Provider 4 via Payment Gateway 22. |
| 24 | WWW | Web Server | |

The key information entity for the consumer 2 is the media stream. The consumer 2 wants it to be displayed or interpreted by his consumer 2 premises equipment.

The key information for the content provider 3 is twofold: (a) a transaction that proves authorization and (b) a derived access right expressed as rule or rule set. The rule set controls a conditional access 7 module, which grants or rejects access.
The nature of a multi- or a broadcast media is that the consumer 2 of a casting is unknown. In order to couple an individual access right with an anonymous delivery the delivery has to be inconvenient for direct consumption. A dedicated intermediary node close to the source of the delivery chain adds noise to the signal, which is hard to remove without a dedicated intermediary node. The noise eliminating entity uses a second signal stream, which delivers dedicated methods for noise removal. This second channel is not critical relating to bandwidth consumption and is dedicated to an authorized consumer 2 or in general dedicated to a source of a valid transaction.
The key information of this invention is twofold: (a) an anonymous noisy media channel, (b) an authenticated, authorized and interruptible stream of noise reduction instructions.

The following table gives a detailed overview on information as deployed by this invention.

**Table 3**

| **Information descriptions** | | | |
|---|---|---|---|
| **#** | **Abb.** | **Information** | **Description** |
| 25 | ipcMI | ipcMetaInfo | The WWW server 24 sends meta information's to WWW client 6, which calls ipc Media Descramble Client 12 as a helper application due to its local Multipurpose Internet Mail Extensions (MIME) type settings. |
| 26 | ipcS-K | ipcStream-Key | The key generator, ipc Key Generator 10, sends ipc Stream-Key to: |
| | | | (a) ipc Scramble Server 18 to enable scrambling |
| | | | (b) various ipc Uni-Caster 19 to enable scaling |
| | | | The uni caster, ipc Uni-Caster 19, forwards ipc Stream-Key to ipc Media Descramble Client 12 to: |
| | | | (a) Enable de-scrambling |
| | | | (b) Conditional access 7. |
| 27 | ipcS-M | ipcStream-Method | The method server, ipc Method Server 13, sends ipc Stream-Method to: |
| | | | (a) ipc Scramble Server 18 to enable scrambling |
| | | | (b) ipc Key Generator 10 to enable key generation |
| | | | (c) ipc Media Descramble Client 12 to enable de-scrambling |
| 28 | ipcS-SM | ipcStream-ScrambledMedia | The scramble server, ipc Scramble Server 18, sends ipc Stream-Scrambled Media to ipc Multi-Caster 11. |
| | | | The multicaster, ipc Multi-Caster 11, sends ipc Stream-Scrambled Media to ipc Media Descramble Client 12 |
| 29 | MIME | Meta-Info | The WWW client 6 as well as ipc Media Descramble Client 12 maintain a MIME table. The clients perform MIME-Table lookups with input from the ipcMetaInfo. The result is a call of a helper application due to its local MIME type settings. The helper application for ipc Stream-Scrambled Media 28 is ipc Media Descramble Client 12, the helper application for anything else is retrieved from IETF's assigned numbers RFC. IpcMDC 12 receives it's MIME table as a method from ipc Method Server 13. |
| 30 | R | Rule | The Digital Rights Management 8 system issues rules to conditional access 7 modules. |
| 31 | S-M | Media Stream | The stream server sends native media streams either directly to a corresponding stream client or via the scrambling service, ipc Scramble Server 18, of this invention. |

The following table gives a detailed overview on communication relations as deployed by this invention.

**Table 3**

| **Communication Relations** | | |
|---|---|---|
| **#** | **Relation** | **Description** |
| 32 | Brwsr:DRM | The consumer orders an access right |
| 33 | Brwsr:ipcMDC | The browser invokes the helper application ipc Media Descramble Client |
| 34 | Brwsr:PS | The consumer purchases an access right |
| 35 | Brwsr:WWW | The consumer navigates through online offerings of services |
| 36 | CA:DRM | The Digital Rights Management system performs a rule based control of a conditional access module |
| 37 | CA:ipc MDC | The conditional access controls the connection to ipc Media Descramble Client in a transparent manner |
| 38 | CA:ipcMSS | The conditional access controls the connection to ipc Media Scramble Service in a transparent manner |
| 39 | CA:ipcUC | The conditional access controls the key stream from ipc Uni-Caster to ipc Media Descramble Client |
| 40 | DRM:CA | The Digital Rights Management system performs a rule based control of a conditional access module |
| 41 | DRM:PS | The Digital Rights Management system receives a budget statement from Payment Server |
| 42 | ipcBC:ipcMDC | The ipc Broad-Caster is broadcasting an uncontrolled but scrambled media stream of premium content to the world - ipc Media Descramble Client listens to the casting |
| 43 | ipcBC:ipcSS | The ipc Scramble Server is uni-casting a scrambled stream to ipc Broad-Caster - same logic as ipc Multi-Caster:ipc Scramble Server |
| 44 | ipcKG:ipcSS | The ipc Key Generator is supplying ipc Scramble Server with scrambling keys |
| 45 | ipcKG:ipcUC | The ipc Key Generator is supplying ipc Uni-Caster with de-scrambling keys |
| 46 | IpcKG:ipcMS | The ipc Method Server is supplying ipc Key Generator with key generation information |
| 47 | ipcMC:ipcMDC | The ipc Multi-Caster is multicasting an uncontrolled but scrambled media stream of premium content to the world - ipc Media Descramble Client registers to the casting |
| 48 | ipcMDC:ipcMS | The ipc Method Server is supplying ipc Media Descramble Client with a stream of de-scrambling methods |
| 49 | ipcMDC:ipcMSS | Collapsed and generic view on communication relations between server side and client side modules, subsuming 37 + 39, 47and 48, as used in deployment view |
| 50 | ipcMDC:MC | The ipc Media Descramble Client is supplying Media Client with media sources |
| 51 | ipcMS:ipcSS | The ipc Method Server is supplying ipc Scramble Server with a stream of scrambling methods |
| 52 | ipcMSS:MS | Collapsed and generic view on communication relations between server side media service and server side scrambling service, subsuming 54, as used in deployment view |
| 53 | ipcN:ipcN | generic view on communication relations between all nodes, similar to ipc Node:3rd or ipc Production Suite:3^{rd} whereas "3^{rd"} represents non-ipc modules |
| 54 | ipcSS:MS | The Media Server is supplying the ipc Scramble Server with an unscrambled original media stream |
| 55 | PG:PS | Payment Gateway routes transactions as generated by Payment Server to the banking network |

The coarse processing steps of the method related to location of information are shown in Fig. 2. The semantics of these steps are related to phases as follows:

### I Preconditions

1) Media stream 31 via link 52 from Media/Stream Server 21 to ipcScrambleServer 18
2) Method 27 via link 51 from ipcMethodServer 13 to ipcScrambleServer 18
3) Key 26 via link 44 from ipcKeyGenerator 10 to ipcScrambleServer 18
4) Scrambled stream 28 via link 43 from ipcScrambleServer 18 to ipcMultiCaster 11

### II Session Initiation

5) Meta information 12 via link 35 from WWW server 24 to WWW client 6. This has the advantage that the WWW client guides the customer or consumer to a first installation of the descrambled client or decryption means 12 and enables subsequent automated calls of content.
6) Meta information 29 via link 33 from WWW client 6 to de-scramble client 12. This has the advantage that the descrambled client or decryption means 12 does not need to know how to handle the media and can focus or specialise only and solely on the descrambling or decryption.
7) Method stream 27 via link 48 from ipcMethodServer 13 to de-scramble client 12
8) Scrambled stream 28 via link 47 from ipcMultiCaster 11 to de-scramble client 12
9) Key stream 37 via link 39 from ipcUniCaster n 19 to de-scramble client 12 via conditional access module 7
10) Key stream 27 via link 45 from ipcKeyGenerator 10 to ipcUniCaster n 19

### III Session

11) Media stream 31 via link 50 from de-scramble client 12 to media/stream client 20
12) Loop: (7) to (11) till conditional access 7 drops rule 30 for key stream permission

### IV Session Termination

13) Conditional access 7 drops rule 30 for key stream 27 permission
14) Key stream 37 via link 39 from ipcUniCaster n 19 to de-scramble client 12 via conditional access module 7 stops
15) Media stream 31 via link 50 from de-scramble client 12 to media/stream client 20 stops
16) De-registration from network based multicast service by de-scramble client 12. This has the advantage that the bandwidth consumption through multicast streams to budgeted sections can be limited and it is not possible to have a hidden or forgotten stream that consumes bandwidth endlessly.

### Session initiation

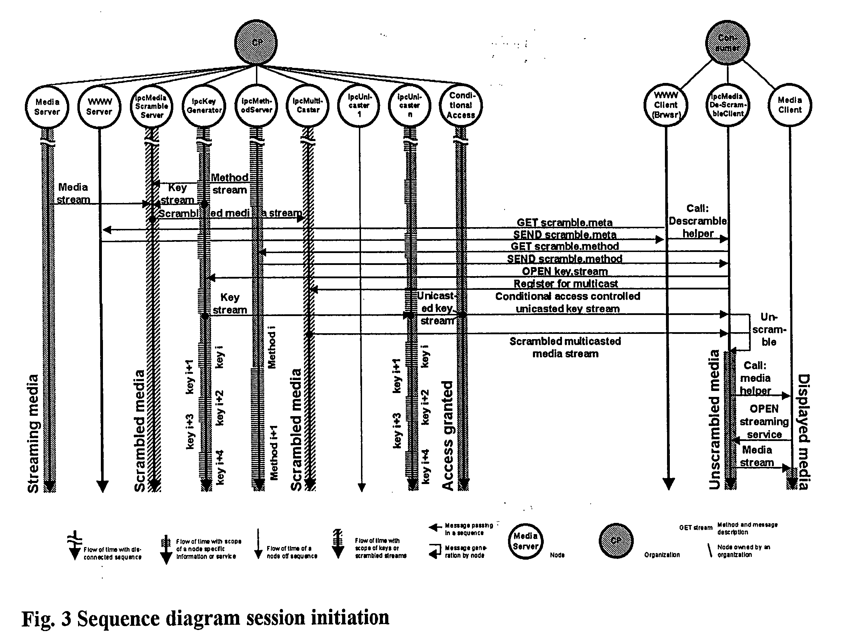

### Fig. 3 Sequence diagram session initiation

### I Preconditions

**Method Server 13:** delivers method stream. Methods are due to change once a day.
**Media/Stream Server 21:** delivers media stream based on media archives or life casts.
**Key Generator 10:** delivers key stream based on random numbers. Keys are due to change every second.
**Scramble Server 18:** delivers scrambled media stream based on a media stream from the stream server, a scrambling method from the method server steered by a key stream from the key generator.

### II Session Initiation

**WWW Browser 6:** issues an http-get request to WWW server 24 for a media link, e.g. scramble meta file.
**WWW Server 24:** issues an http-reply to WWW browser 6 with a media link, e.g. scramble meta file.
**WWW Browser 6:** checks MIME type of meta file from scramble service and performs a MIME table look-up. The result of the look-up is an instruction to call the de-scramble client using the meta file as input.
**De-scramble Client 12:** computes de-scramble method-request from scramble meta file and issues an http-get request to method server 13.
**Method Server 13:** issues a reply to de-scramble client 12 with de-scramble method.
**De-scramble Client 12:** computes source of key stream from scramble meta file and issues an open key stream request to key server and registers for the multicast session with it's local router.
**Key Generator 10:** delivers key stream to uni-casting services. The uni-casting service for key stream distribution realizes its own scaling approach.
**Uni-caster n 19:** accepts key stream session with de-scramble client 12 and delivers key stream to de-scramble client 12.
**Multi-caster 9, 11:** delivers scrambled media stream to network.
**De-scramble Client 12:** simultaneously (a) receives key stream from uni-caster n via conditional access 7 module (b) receives scrambled multicast stream from network and (c) uses scramble method from method server 13 and key stream to de-scramble (d) computes the MIME type of the media stream gained after de-scrambling (e) calls stream client with meta file with guide to itself as media source.
**Media/Stream client 20:** issues stream open request to de-scrambling client 12 and displays media stream.

### Session termination

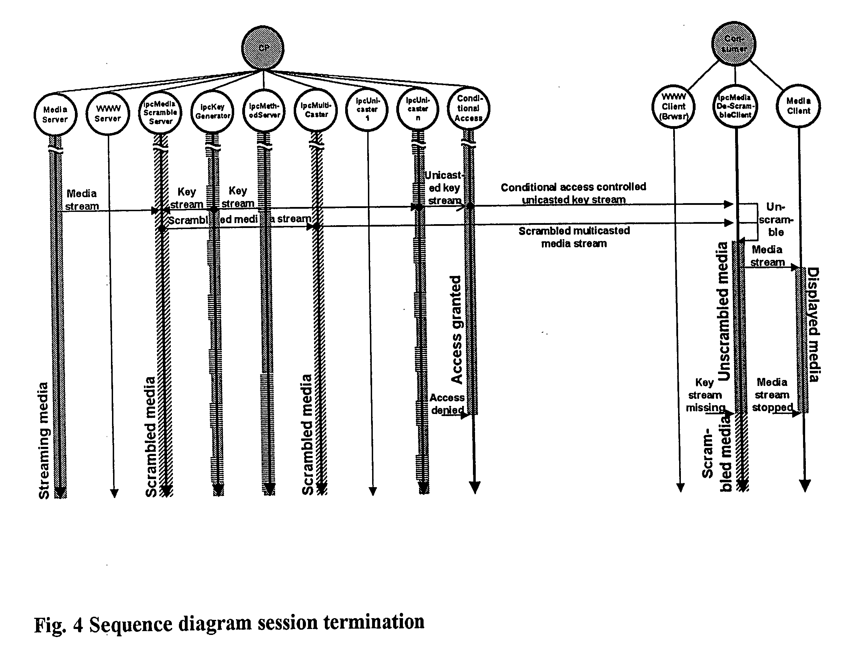

### Fig. 4 Sequence diagram session termination

### III Session

**Method Server 13:** delivers method stream.
**Media/Stream Server 21:** delivers media stream based on media archives or life casts.
**Key Generator 10:** simultaneously (a) delivers key stream based on random numbers to scrambling server and (b) to uni-caster n.
**Uni-caster n 19:** delivers key stream to de-scramble client 12.
**Multi-caster 9, 11:** delivers scrambled media stream to network.
**De-scramble Client 12:** simultaneously (a) receives key stream from uni-caster n via conditional access 7 module (b) receives scrambled multicast stream from network and (c) uses scramble method from method server 13 and key stream to de-scramble (d) computes mime type of key stream and calls helping stream client.
**Media/Streaming client 20:** receives and displays media stream.

### VI Session Termination

**Conditional access 7:** denies access by interruption of the connection between de-scramble client 12 and uni-caster n on budget expiry.
**De-scramble Client 12:** looses its ability to de-scramble the stream on missing key stream. The de-scramble client 12 stops streaming to streaming client and de-registers from network based streaming services.
**Streaming Client 20:** looses its ability to display the stream on missing media stream.

## Claims

1. Content service apparatus (14) for forwarding content from a content server (21) to a customer (2), comprising
encrypting means (18) for encrypting a received media stream received from said content server (21) on the basis of encryption keys,
stream transmitting means (9; 11) for transmitting the encrypted media stream to said customer,
key transmitting means (19) for transmitting decryption keys for decrypting said encrypted media stream to said customer.

2. Apparatus (14) according to claim 1,
**characterized in**
**that** said stream transmitting means (9; 11) transmits said encrypted media stream to said customer (2) on the basis of a broadcast service or a multicast service.

3. Apparatus (14) according to claim 1 or 2,
**characterized in**
**that** said key transmitting means (9; 11) transmits said decryption keys to said customer (2) on the basis of a unicast service.

4. Apparatus (14) according to claim 3,
**characterized in**
**that** said key transmitting means (19) transmits said decryption keys to said customer yia a conditional access module (7) for controlling the access to said content.

5. Apparatus (14) according to one of the claims 1 to 4,
**characterized by**
key generating means (10) for generating varying encryption keys for encrypting said received media stream.

6. Apparatus (14) according to claim 5,
**characterized by**
method providing means (13) for providing key generating methods, whereby said key generating means (10) generates said encryption keys on the basis of key generating methods received from said method providing means.

7. Apparatus (14) according to claim 6,
**characterized in**
**that** said method providing means (13) transmits information about said key generating methods to said customer (2) in order to enable decryption of said encrypted media stream.

8. Apparatus (14) according to claim 7,
**characterized in,**
**that** said method providing means (13) transmits said information about said key generating methods to said customer on the basis of a unicast service.

9. Conditional access apparatus (7) for controlling the delivery of content from a content server (21) to a customer (2), whereby said conditional access apparatus (7) receives said decryption keys from a content service apparatus (14) according to one of the claims 1 to 8, and transmits said received decryption keys to said customer (2) depending on an access rule for said customer.

10. Conditional access apparatus (7) according to claim 9,
**characterized in,**
**that** the transmission of said decryption keys to said customer (2) stops if said access rule expires.

11. Customer apparatus (2) for receiving content from a content service apparatus (14) according to one of the claims 1 to 8, comprising,
decryption means (12) for decrypting an encrypted media stream received from said content service apparatus (14) on the basis of decryption keys received from said content service apparatus (14) to obtain a decrypted media stream.

12. Customer apparatus (2) according to claim 11,
**characterized by**
further receiving information about key generating methods from said content service apparatus (14), whereby said decryption means decrypts said encrypted media stream on the basis of said received decryption keys and said received information about key generating methods.

13. Method for forwarding content from a content server to a customer, comprising the steps of
encrypting a media stream received from said content server on the basis of encryption keys, transmitting the encrypted media stream to said customer,
transmitting decryption keys for decrypting said encrypted media stream to said customer.

14. Method according to claim 13,
**characterized in**,
said encrypted media stream is transmitted to said customer on the basis of a broadcast service or a multicast service.

15. Method according to claim 13 or 14,
**characterized in**
**that** said decryption keys are transmitted to said customer on the basis of a unicast service.

16. Method according to claim 15,
**characterized in**
**that** said decryption keys are transmitted to said customer via a conditional access module for controlling the access to said content.

17. Method according to one of the claims 13 to 16,
**characterized by**
the further step of generating varying encryption keys for encrypting said received media stream.

18. Method according to claim 17,
**characterized by**
the further step of providing key generating methods, whereby said encryption keys are generated on the basis of said key generating methods.

19. Method according to claim 18,
**characterized by**
the further step of transmitting information about said key generating methods to said customer in order to enable decryption of said encrypted media stream.

20. Method according to claim 19,
**characterized in,**
**that** said information about said key generating methods is transmitted to said customer on the basis of a unicast service.

21. Method according to one of the claims 13 to 17,
**characterized by**
the further step of controlling the delivery of said content from said content server to said customer by receiving said decryption keys and transmitting said received decryption keys to said customer depending on an access rule for said customer.

22. Method according to claim 21,
**characterized in,**
**that** said transmission of said decryption keys to said customer is stopped if said access rule expires.

23. Method according to one of the claims 13 to 22,
**characterized by**
the further step of decrypting said encrypted media stream on the basis of said received decryption keys to obtain a decrypted media stream.

24. Method according to claim 23,
**characterized in,**
**that** said encrypted media stream is decrypted on the basis of said received decryption keys and said received information about key generating methods.

25. Computer software product for forwarding content from a content server to a customer, being adapted to perform the method steps according to one of the claims 13 to 24.
